# EUROPEAN PATENT APPLICATION

(11) **EP 2 487 951 A1**
(43) Date of publication of application: **15.08.2012**
(21) Application number: 10826116.5
(22) Date of filing: 01.11.2010
(51) Int. Cl.: H04W 24/00, H04W 24/02, H04W 24/04

(54) **COORDINATION PROCESSING METHOD AND APPARATUS OF SELF ORGANIZING OPERATION, COMMUNICATION SYSTEM**

(30) Priority: 02.11.2009 CN 200910207958
(71) Applicant: Huawei Technologies Co., Ltd., Guangdong 518129 (CN)
(72) Inventor: ZHANG, Kai, Guangdong 518129 (CN); ZOU, Lan, Guangdong 518129 (CN); SONG, Ping, Guangdong 518129 (CN); NIU, Weiguo, Guangdong 518129 (CN)
(74) Representative: Thun, Clemens
(86) International application number: PCT/CN2010/078297
(87) International publication number: WO 2011/050753

(57) **Abstract**

Embodiments of the present invention disclose a coordination processing method and device for a self organizing operation, and a communication system. The coordination processing method for a self organizing operation includes: obtaining a preset coordination relationship between a first self organizing operation and a second self organizing operation before performing the first self organizing operation; if the second self organizing operation exists, performing the first self organizing operation and the second self organizing operation according to the coordination relationship; and if the second self organizing operation does not exist, performing the first self organizing operation. In the embodiments of the present invention, various self organizing operations existing in a SON technology may be coordinated effectively, thereby avoiding an unnecessary self organizing operation and rollback recovery operation.

## Description

This application claims priority to Chinese Patent Application No. 200910207958.7, filed with the Chinese Patent Office on November 2, 2009, and entitled "COORDINATION PROCESSING METHOD AND DEVICE FOR SELF ORGANIZING OPERATION AND COMMUNICATION SYSTEM", which is incorporated herein by reference in its entirety.

### FIELD OF THE INVENTION

The present invention relates to communications technologies, and in particular, to a coordination processing method and device for a self organizing operation and a communication system.

### BACKGROUND OF THE INVENTION

As a next generation wireless communication technology, the long term evolution (Long Term Evolution, hereinafter referred to as LTE) has characteristics such as mass network elements, all-Internet protocol (Internet Protocol, hereinafter referred to as IP), multi-vendor (multi-vendor), and inter-system, and faces a very complex operation and maintenance scenario. If a conventional manner is adopted to implement network optimization and maintenance, maintenance personnel need to have a high level in aspects such as experience, judgment, operation, and skill, therefore, a vast cost of network optimization and maintenance needs to be invested. In order to solve this problem, a self organizing network (Self Organizing Networks, hereinafter referred to as SON) technology emerges. In the SON technology, experience of experts and an intelligent technology are solidified into an automatic program. By executing the automatic program, a network can automatically collect data, automatically analyze the collected data to find a problem, and solve the found problem through automatic adjustment, so that manual intervention is reduced to some degree, and a requirement for the skill of the maintenance personnel is decreased, thereby reducing the cost of the network optimization and maintenance.

According to the standard of the third generation partner project (3rd Generation Partner Project, hereinafter referred to as 3GPP), at present, the SON technology mainly includes a self-configuration (Self-configuration, hereinafter referred to as SC) technology, a self-healing (Self-healing, hereinafter referred to as SH) technology, and a self-optimization (Self-optimization, hereinafter referred to as SO) technology. The SC technology is mainly used to automatically configure a network element, for example, automatically preparing a wireless parameter, automatically preparing a transmission parameter, and automatically downloading and activating software, so as to accelerate automatic configuration of the network. The SH technology is mainly used to automatically perform some healing operations to automatically solve or relieve some faults, for example, a cell outage (Cell outage, hereinafter referred to as CO) fault, in the network. A main purpose of the SO technology is to automatically perform some optimization operations by automatically collecting and analyzing some indexes of the network, such as a performance measurement index, a warning, and a notification, so as to optimize network performance.

Effective coordination cannot be performed between various self organizing operations existing in the SON technology, for example, between self organizing operations in the SH technology, between self organizing operations in the SO technology, and between a self organizing operation in the SH technology and a self organizing operation in the SO technology, which causes an unnecessary self organizing operation and rollback recovery operation and unnecessarily consumes a network resource, thereby increasing a work load of the network and affecting the network performance.

### SUMMARY OF THE INVENTION

Embodiments of the present invention provide a coordination processing method and device for a self organizing operation and a communication system, so as to effectively coordinate various self organizing operations existing in a SON technology, and avoid an unnecessary self organizing operation and rollback recovery operation. The embodiments of the present invention may be specifically implemented through the following technical solutions.

In an aspect, the present invention provides a coordination processing method for a self organizing operation, where the method includes: obtaining a preset coordination relationship between a first self organizing operation and a second self organizing operation before performing the first self organizing operation; if the second self organizing operation exists, performing the first self organizing operation and the second self organizing operation according to the coordination relationship; and if the second self organizing operation does not exist, performing the first self organizing operation.

In another aspect, the present invention provides a coordination processing device for a self organizing operation, where the device includes: an obtaining module, configured to obtain a preset coordination relationship between a first self organizing operation and a second self organizing operation before performing the first self organizing operation; a detecting module, configured to detect whether the second self organizing operation exists; and a performing module, configured to, according to a detection result of the detecting module, perform the first self organizing operation and the second self organizing operation according to the coordination relationship when the second self organizing operation exists, where the coordination relationship is obtained by the obtaining module; and perform the first self organizing operation when the second self organizing operation does not exist.

In another aspect, the present invention provides a communication system, where the communication system includes a base station, configured to: obtain a preset coordination relationship between a first self organizing operation and a second self organizing operation before performing the first self organizing operation; when the second self organizing operation exists, perform the first self organizing operation and the second self organizing operation according to the coordination relationship; and when the second self organizing operation does not exist, perform the first self organizing operation.

In another aspect, the present invention further provides another communication system, where the communication system includes: a first base station, configured to: obtain a preset coordination relationship between a first self organizing operation and a second self organizing operation before performing the first self organizing operation; when a second self organizing operation that need to be performed by a second base station exists, send the coordination relationship to the second base station; and perform the first self organizing operation in coordination with the second base station according to the coordination relationship; and the second base station, configured to perform the second self organizing operation in coordination with the first base station according to the coordination relationship.

In another aspect, the present invention further provides a communication system, where the communication system includes: a third base station, configured to: send a notification message to a fourth base station before performing a first self organizing operation; receive a coordination relationship between the first self organizing operation and a second self organizing operation, where the coordination relationship is sent by the fourth base station; and perform the first self organizing operation in coordination with the fourth base station according to the coordination relationship; and the fourth base station, configured to: receive the notification message; obtain a preset coordination relationship between the first self organizing operation and the second self organizing operation, and send the preset coordination relationship to the third base station; and perform the second self organizing operation in coordination with the third base station according to the coordination relationship.

In another aspect, the present invention further provides a network management system, where the network management system includes: a receiving device, configured to receive a coordination relationship setting request, a coordination relationship query request, a coordination relationship update request, and a coordination relationship deleting request; a performing device, configured to store a coordination relationship in the coordination relationship setting request in a base station or the network management system, or obtain a corresponding coordination relationship from the base station or the network management system according to a query condition in the coordination relationship query request, and send the corresponding coordination relationship to a display device, or update an original content of a coordination relationship in the base station or the network management system according to a target content in the coordination relationship update request, or delete a coordination relationship in the base station or the network management system according to the coordination relationship deleting request; and the display device, configured to display the coordination relationship.

Based on the coordination processing method and device for a self organizing operation and the communication system that are provided in the foregoing embodiments of the present invention, the preset coordination relationship between the first self organizing operation and the second self organizing operation may be obtained before the first self organizing operation is performed, and when the second self organizing operation exists, the first self organizing operation and the second self organizing operation are performed according to the coordination relationship, thereby effectively coordinating various self organizing operations existing in the SON technology, and avoiding the unnecessary self organizing operation and rollback recovery operation. Compared with the prior art, a network resource consumed by the unnecessary self organizing operation and rollback recovery operation is saved, a work load of a network is relieved, and network performance is improved.

### BRIEF DESCRIPTION OF THE DRAWINGS

To describe the technical solutions in the embodiments of the present invention or in the prior art more clearly, the accompanying drawings required for describing the embodiments or the prior art are introduced briefly in the following. Apparently, the accompanying drawings in the following description are only some embodiments of the present invention, and persons of ordinary skill in the art may still derive other drawings from these accompanying drawings without creative efforts.
FIG. 1 is a flow chart of a coordination processing method for a self organizing operation according to an embodiment of the present invention;
FIG. 2 is a flow chart of a coordination processing method for a self organizing operation according to another embodiment of the present invention;
FIG. 3 is a flow chart of a coordination processing method for a self organizing operation according to another embodiment of the present invention;
FIG. 4 is a flow chart of a coordination processing method for a self organizing operation according to an application embodiment of the present invention;
FIG. 5 is a schematic diagram of a neighbor cell relationship according to the present invention;
FIG. 6 is a schematic structural diagram of a coordination processing device for a self organizing operation according to an embodiment of the present invention;
FIG. 7 is a schematic structural diagram of a coordination processing device for a self organizing operation according to another embodiment of the present invention;
FIG. 8 is a schematic structural diagram of a coordination processing device for a self organizing operation according to another embodiment of the present invention;
FIG. 9 is a schematic structural diagram of a coordination processing device for a self organizing operation according to another embodiment of the present invention;
FIG. 10 is a schematic structural diagram of a communication system according to an embodiment of the present invention; and
FIG. 11 is a schematic structural diagram of a communication system according to another embodiment of the present invention; and
FIG. 12 is a schematic structural diagram of a communication system according to another embodiment of the present invention; and
FIG. 13 is a schematic structural diagram of a network management system according to an embodiment of the present invention.

### DETAILED DESCRIPTION OF THE EMBODIMENTS

The technical solutions in the embodiments of the present invention are clearly and completely described in the following with reference to the accompanying drawings in the embodiments of the present invention. Apparently, the embodiments to be described are only a part rather than all of the embodiments of the present invention. Based on the embodiments of the present invention, all other embodiments obtained by persons of ordinary skill in the art without creative efforts shall fall within the protection scope of the present invention.

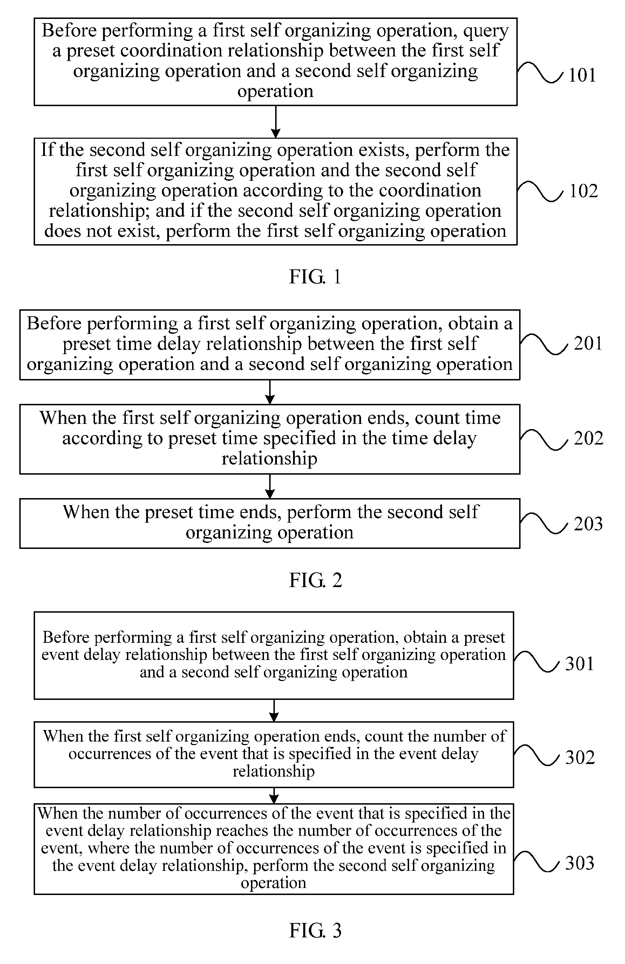

FIG. 1 is a flow chart of a coordination processing method for a self organizing operation according to an embodiment of the present invention. As shown in FIG. 1, the coordination processing method for a self organizing operation in this embodiment includes the following contents.

101: Before performing a first self organizing operation, query a preset coordination relationship between the first self organizing operation and a second self organizing operation.

Specifically, as a specific example, the foregoing coordination relationship may include any one or multiple kinds of the following: a delay relationship, a performing relationship in different application scenarios, a priority relationship, a weight relationship, and a logic operation relationship. As a specific example of the present invention, the delay relationship may be specifically a time relationship, or called a time delay relationship, and may also be an event relationship, or called an event delay relationship.

102: If the second self organizing operation exists, perform the first self organizing operation and the second self organizing operation according to the coordination relationship between the first self organizing operation and the second self organizing operation; and if the second self organizing operation does not exist, perform the first self organizing operation.

With the coordination processing method for a self organizing operation provided in this embodiment of the present invention, the preset coordination relationship between the first self organizing operation and the second self organizing operation may be obtained before the first self organizing operation is performed, and when the second self organizing operation exists, the first self organizing operation and the second self organizing operation are performed according to the coordination relationship, thereby effectively coordinating various self organizing operations existing in a SON technology, and avoiding an unnecessary self organizing operation and rollback recovery operation. Compared with the prior art, a network resource consumed by the unnecessary self organizing operation and rollback recovery operation is saved, a work load of a network is relieved, and network performance is improved.

In the embodiment shown in FIG. 1, the first self organizing operation and the second self organizing operation may both are SH operations, SO operations, or SC operations. In addition, as another specific embodiment of the present invention, the first self organizing operation and the second self organizing operation may also be an SH operation and an SC operation respectively, or be an SO operation and an SC operation respectively, or be an SH operation and an SO operation respectively. For example, the first self organizing operation is an SH operation and the second self organizing operation is an SO operation. For another example, the first self organizing operation is an SO operation and the second self organizing operation is an SH operation.

When the coordination relationship between the first self organizing operation and the second self organizing operation is a delay relationship, accordingly, 102 may specifically be: After the first self organizing operation ends, perform a delay according to the delay relationship; and after the delay ends, perform the second self organizing operation.

FIG. 2 is a flow chart of a coordination processing method for a self organizing operation according to another embodiment of the present invention. In this embodiment, a delay relationship is specifically a time delay relationship. As shown in FIG. 2, the coordination processing method for a self organizing operation in this embodiment includes the following contents.

201: Before performing a first self organizing operation, obtain a preset time delay relationship between the first self organizing operation and a second self organizing operation.

202: When the first self organizing operation ends, count time according to preset time specified in the time delay relationship.

203: When the preset time ends, perform the second self organizing operation.

FIG. 3 is a flow chart of a coordination processing method for a self organizing operation according to another embodiment of the present invention. In this embodiment, a delay relationship is specifically an event delay relationship. As shown in FIG. 3, the coordination processing method for a self organizing operation in this embodiment includes the following contents.

301: Before performing a first self organizing operation, obtain a preset event delay relationship between the first self organizing operation and a second self organizing operation, where the event delay relationship includes a specified event and the specified number of occurrences of the event.

302: After the first self organizing operation ends, count the number of occurrences of the event that is specified in the event delay relationship.

303: When the number of occurrences of the event that is specified in the event delay relationship reaches the number of occurrences of the event, where the number of occurrences of the event is specified in the event delay relationship, perform the second self organizing operation.

Before a procedure of the coordination processing method for the self organizing operation in each embodiment of the present invention, a coordination relationship may be set according to any one or multiple items of the following: a self organizing operation type, an application scenario type, an operation object type, an operation object attribute, an event type, and a time type, that is, the coordination relationship is established and stored, and then the set coordination relationship may also be queried, updated, or deleted. The self organizing operation type indicates which kind of self organizing operation a self organizing operation is, such as an SH operation, an SO operation, and an SC operation. The application scenario type refers to specific application scenario classification. For example, different application scenarios may be set for cells of a whole network, part of cells, a certain specific cell, a certain network element, or a certain type of network element. The operation object type refers to an operation object for performing the self organizing operation, for example, types such as a base station, a cell, and a single board. The operation object attribute refers to an attribute of an operation object for performing the self organizing operation, such as attributes of a base station, attributes of a cell, and attributes of a single board. The event type refers to a type of an event for triggering the self organizing operation, such as a fault, performance statistics, and a diagnostic test.

For cell outage management (Cell outage management, hereinafter referred to as COM) in an SH technology, two kinds of self organizing operations, that is, cell outage detection (Cell outage detection, hereinafter referred to as COD) and cell outage compensation (Cell outage compensation, hereinafter referred to as COC), exist. After a cell outage (Cell outage, hereinafter referred to as CO) ends, recovery needs to be performed on a COC operation, for example, deleting a newly added temporary cell, or recovering original configuration of a neighbor cell around an outage cell, and recovering an original neighbor cell relationship before the CO. In the prior art, if the COD performs COC once detecting a CO fault, the following problems exist.

In one aspect, for some CO faults lasting for a very short time, the CO possibly ends when the COC is not yet completed. At this time, when a COC operation does not take any effective effect yet, recovery needs to be performed on an already completed COC operation. For example, a CO caused by a software exception of a base station ends as the software is automatically restarted and restored to normal, and at this time, some COC operations, for example, adjusting an antenna tilt and transmission power of a neighbor cell and updating a neighbor cell relationship, are possibly not completed. Rollback recovery need to be performed on these COC operations that has not yet taken an effective effect, that is, recovering an original antenna tilt and transmission power of each neighbor cell, and an original neighbor cell relationship.

In another aspect, for some CO faults lasting for a very short time and in a special cell, the CO possibly ends soon after the COC is completed. In this case, during the COC, no user equipment (User Equipment, herein after referred to as UE) exists or no communication event occurs in a range of a compensated outage cell. As the CO ends, recovery also needs to be performed on the completed COC operation when the COC operation does not take any effective effect. For example, a CO fault caused by an abnormal network connection ends as the network connection recovers from a fault. If the cell is located in a certain remote area or it is late at night, possibly, no UE exists or no communication event occurs in the outage cell during this period. Some COC operations performed on the outage cell, for example, adjusting an antenna tilt and transmission power of a neighbor cell and updating a neighbor cell relationship, do not take an effective effect, and rollback recovery needs to be performed after the COC operations end, that is, recovering an original antenna tilt and transmission power of each neighbor cell and an original neighbor cell relationship.

In the foregoing two situations, coordination between the self organizing operations COD and COC cannot be performed. The COC does not take an actually effective effect. The COD incurs an unnecessary COC operation and a rollback recovery operation of the COC operation. These COC operations consume a network resource unnecessarily, thereby increasing a work load of a base station (eNB) and affecting network performance, for example, adding a new temporary cell or adjusting or sacrificing performance of some neighbor cells of an outage cell, for example, reducing a data rate, reducing capacity, and introducing new inter-cell interference, so as to achieve compensation coverage of the outage cell.

In order to solve the foregoing problem, according to an embodiment of the present invention, when the first self organizing operation and the second self organizing operation are SH operations, a coordination relationship may also be set according to any one or multiple items of the following: an application scenario type, a fault type of a cell of a base station, a type of a cell of a faulty base station, an attribute of a cell of a faulty base station, and a time type, that is, the coordination relationship is established and stored, and the set coordination relationship may also be queried, updated, or deleted according to an actual requirement. For example, for a CO caused by a software fault of base station equipment, setting a default delay value for all cells in the whole network may be that the maximum number of restart attempts is 3. Then, policy modification is performed for different cells. Setting a delay value of a key cell is that the maximum number of restart attempts is 1. Setting a delay value of a cell that has sparse traffic at night is that the maximum number of restart attempts is 5.

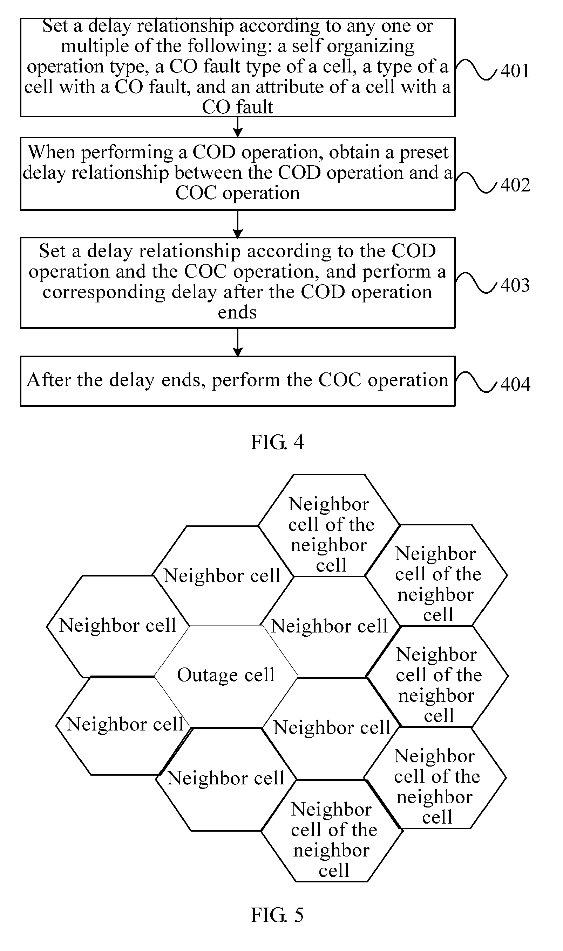

For a CO fault, COM may be used to automatically perform a corresponding healing operation to solve or relieve the CO fault. Application of the coordination processing method for a self organizing operation according to the present invention is described in the following by taking an example that the first self organizing operation is COD and the second self organizing operation is cell outage compensation COC. In the CO, a fault of a cell is an outage fault. FIG. 4 is a flow chart of a coordination processing method for a self organizing operation according to an application embodiment of the present invention. As shown in FIG. 4, the application embodiment includes the following contents.

401: Set a delay relationship according to any one or multiple of the following: a self organizing operation type, a CO fault type of a cell, a type of a cell with a CO fault, and an attribute of a cell with a CO fault. Details are as follows.

The CO fault has many CO fault types, which may be: a software/hardware fault inside a base station, for example, a radio frequency board is faulty and a channel processing software is error; and may also be a fault outside the base station, for example, power is interrupted or a network connection is faulty; and may even be caused by reasons such as wrong network configuration, a natural disaster, and a terrorist attack. Different delay relationships may be set for different CO faults. For example, for a software/hardware fault inside the base station, since restart and recovery last for a very short time, shorter preset time may be set, where the preset time is specified in a time delay relationship.

A type of a cell with a CO fault may be classified into: a traffic dense area, a traffic sparse area, and a key area. Different delay relationships may be set for different types of CO cells. For example, preset time in a time delay relationship of a key area may be set to 0, or the number of occurrences of an event in an event delay relationship of the key area may be set to 0.

An attribute of a faulty cell may be time when a CO occurs or the number of neighbor outage cells. If the CO occurs at night with sparse traffic, longer preset time in a delay relationship may be set, so that a base station where a CO occurs first performs self-healing. If the CO occurs in the daytime with dense traffic, in order to ensure call quality, shorter preset time in the delay relationship may be set, and the preset time may even be set to 0. If a CO fault occurs in multiple neighbor cells at the same time, in order to ensure service coverage, the preset time in the delay relationship may be set to 0.

In addition, a delay relationship may be set according to self organizing operation types, where the self organizing operation types are COD and COC.

402: Before performing a COD operation, obtain a preset delay relationship between the COD operation and a COC operation. Multiple COD operation manners exist. A COD operation manner with good real time may be a warning, performance measurement, or a diagnostic test. A COD operation manner with bad real time may be a road test or a customer complaint.

403: According to the delay relationship between the COD operation and the COC operation, perform a corresponding delay after the COD operation ends.

Specifically, the delay may be performed through a timer. For example, when the COD operation ends, time is counted according to preset time that is specified in a time delay relationship. According to the foregoing setting, the preset time may be several seconds or several minutes. In addition, the delay may also be performed through an event counter. For example, when the COD operation ends, the number of restart attempts due to a software fault of the base station is counted according to specification of an event delay relationship.

404: After the delay in 403 ends, perform the COC operation.

Multiple COC operation manners exist and include: Reconfiguration may be performed by using a newly added temporary cell or one or multiple neighbor cells around a cell where the CO fault occurs, for example, an antenna tilt, transmission power, a modulation manner, an encoding manner, and a switch threshold are adjusted, or a data rate is reduced. Meanwhile, a new neighbor cell relationship of the cell also needs to be established after the COC operation is completed. A surrounding neighbor cell involved in the COC operation may include a direct neighbor cell of the cell where the CO fault occurs, a neighbor cell of the neighbor cell, or even a farther neighbor cell. A specifically designed range of the surrounding neighbor cell is different according to a different adopted compensation algorithm. FIG. 5 is a schematic diagram of a neighbor cell relationship according to the present invention.

After the CO ends, recovery is performed on the COC operation. For example, corresponding to the COC operation, the newly added temporary cell is deleted, or original configuration of the neighbor cell around the cell with the CO fault is recovered, and an original neighbor cell relationship before the CO fault occurs is recovered. After a delay relationship is set according to an actual requirement, coordination between the COC operation and the COD operation may be performed according to the delay relationship, so that an unnecessary COC operation incurred by the COD and a rollback recovery operation of the COC operation are avoided since the COC does not take an actually effective effect, thereby avoiding consumption of a network resource and an increase of a work load of the eNB, and ensuring network performance.

When the first self organizing operation is an SH operation and the second self organizing operation is a self-optimization SO operation, or the first self organizing operation is an SO operation and the second self organizing operation is an SH operation, or the first self organizing operation and the second self organizing operation both are SO operations, a coordination relationship between the first self organizing operation and the second self organizing operation may specifically include any one or multiple kinds of the following: a delay relationship, a performing relationship in different application scenarios, a priority relationship, a weight relationship, and a logic operation relationship. The coordination relationship may be set according to any one or multiple items of the following: a self organizing operation type, an application scenario type, an operation object type, an operation object attribute, an event type, and a time type, that is, the coordination relationship is established and stored, and the set coordination relationship may also be queried, updated, or deleted according to an actual requirement. Specifically, different coordination relationships or the same coordination relationship may be set for cells of a whole network, part of cells, a certain specific cell, a certain network element, or a certain type of network element. For example, for an SH operation of a CO caused by a software fault of base station equipment, setting a default delay value of SO for all cells in the whole network may be that the maximum number of restart attempts is 3. Then, policy modification may be performed for different cells. For example, modifying a delay value of a key cell is that the maximum number of restart attempts is 1, and modifying a delay value of a cell that has sparse traffic at night is that the maximum number of restart attempts is 5.

In addition, in a SON technology, interaction of an SH operation and an SO operation also inevitably occurs. Still taking a CO scenario as an example, when a CO fault occurs in a certain cell, in a process of performing an SH operation for the cell, if an SO operation is not constrained, the following problems occur.

In one aspect, in a process of performing the SH operation, perform a COC operation for the cell where the CO fault occurs. The cell where the CO fault occurs is also called an outage cell, and a relevant neighbor cell relationship of the cell where the CO fault occurs possibly varies all the time. Therefore, an SO operation, for example, a mobility robustness optimization (Mobility Robustness Optimization, hereinafter referred to as MRO) operation, a mobility load balancing (Mobility Load Balancing, hereinafter referred to as MLB) operation, an inter cell interference coordination (Inter Cell Interference Coordination, hereinafter referred to as ICIC) operation, a random access channel (Random Access Channel, hereinafter referred to as RACH) operation, a capacity and coverage (Capacity and Coverage, hereinafter referred to as C&C) operation, an energy saving (Energy Saving, hereinafter referred to as ES) operation, or a load balancing (Load Balancing, hereinafter referred to as LB) operation, possibly needs to be performed continuously, so as to adjust a network parameter, where related performance is possibly even deteriorated temporarily. For some CO faults lasting for a very short time, the CO faults possibly end before optimization is achieved through the SO operation. At this time, the relevant neighbor cell relationship of the cell where the CO fault occurs needs to be recovered to a state before the CO fault, therefore, the SO operation needs to be performed once again to adjust the network parameter continuously. However, an already completed SO operation does not yet take any effective effect. For example, a CO fault caused by a software exception of the base station ends as the software is automatically restarted and restored to normal, and at this time, some SO operations, for example, a cell mobility parameter adjustment operation, are possibly not yet completed. As the relevant neighbor cell relationship of the CO cell is recovered to the state before the CO fault, rollback recovery needs to be performed on these SO operations that do not take an effective effect, that is, an original mobility parameter of each neighbor cell is recovered.

In another aspect, for some CO faults lasting for a very short time and in a special cell, the CO possibly ends soon after the SO is completed. During this period, no UE exists or no communication event occurs in a range of a compensated and optimized outage cell. As the CO ends, the relevant neighbor cell relationship of the cell where the CO fault occurs is recovered to the state before the CO fault, therefore, adjustment recovery needs to be performed on the performed SO operations once again. However, these SO operations do not take any effective effect. For example, a CO fault caused by an abnormal network connection ends as the network connection recovers from a fault. If the cell is located in a certain remote area or it is late at night, possibly, no UE exists or no call event occurs in the outage cell during this period, some SO operations, for example, adjusting a cell mobility parameter, performed for the outage cell do not take any effect, and furthermore, adjustment recovery needs to be performed once again after an outage ends, that is, an original mobility parameter of a neighbor cell is recovered.

In the foregoing two situations, the SO operation that does not take an actual effect incurs an unnecessary SO operation and a rollback recovery operation of the SO operation, thereby unnecessarily consuming a network resource and affecting network performance.

In order to solve the foregoing problems, according to another application embodiment of the present invention, a coordination relationship between an SO operation and an SH operation may be set according to an actual requirement and may specifically be one or a combination of multiple kinds of the following: a delay relationship, a performing relationship in different application scenarios, a priority relationship, a weight relationship, a logic operation relationship, and another relationship between the SO operation and the SH operation. For example, it may be set that the SO operation is performed several minutes later after the SH operation ends. Alternatively, the coordination relationship between the SH operation and the SO operation is pre-designated for different scenarios. For example, in order to ensure a call drop rate, for a cell in a key place, it may be set that the SH operation and the SO operation are performed at the same time. Alternatively, the coordination relationship between the SH operation and the SO operation is designated based on a cell attribute and a priority relationship in combination with a logic operation relationship. For example, for some key cells, it is set that the SH operation and the SO operation are performed at the same time; for some cells, it may be set that only one of the following: the SH operation and the SO operation, can be performed at a certain moment and a priority of the SH operation is higher than that of the SO operation. According to the coordination relationship, when the SO operation and the SH operation may be triggered at the same time, the SH operation should be preferably selected for performing. Specifically, a time relationship between the SH operation and the SO operation may be performed through a timer, an event relationship between the SH operation and the SO operation may be performed through an event counter, and a logic operation relationship in combination with a priority relationship between the SH operation and the SO operation may be performed through a logic counter. After the coordination relationship is set according to an actual requirement, coordination between the SH operation and the SO operation may be performed according to the coordination relationship, so that an unnecessary SO operation and a rollback recovery operation of the SO operation may be avoided, where the unnecessary SO operation and the rollback recovery operation of the SO operation are incurred by the SO that does not take an actually effective effect, thereby avoiding consumption of a network resource and an increase of a work load of the eNB, and ensuring network performance.

In addition, according to another application embodiment of the present invention, a coordination relationship between SO operations may also be set according to an actual requirement, and the SO operations are coordinated according to the coordination relationship. The coordination relationship may also specifically be one or a combination of multiple kinds of the following: a delay relationship, a performing relationship in different application scenarios, a priority relationship, a weight relationship, a logic operation relationship, and another relationship between the SO operations. For example, it may be set that a priority of an MRO operation is higher than that of an LB operation. For a specific operation of this application embodiment, reference may be made to the coordination processing method for a self organizing operation in the foregoing embodiments of the present invention, which is not described here again.

Likewise, according to another application embodiment of the present invention, a coordination relationship between SC operations, a coordination relationship between an SC operation and an SH operation, and a coordination relationship between an SC operation and an SH operation may also be set according to an actual requirement, and the SC operations, the SC operation and the SH operation, and the SC operation and the SH operation are coordinated accordingly according to the coordination relationship. The coordination relationship may also specifically be one or a combination of multiple kinds of the following: a delay relationship, a performing relationship in different application scenarios, a priority relationship, a weight relationship, a logic operation relationship, and another relationship between these operations. For a specific operation of these application embodiments, reference may also be made to the coordination processing method for a self organizing operation in the foregoing embodiments of the present invention, which is not described here again.

In each foregoing embodiment of the present invention, the first self organizing operation and the second self organizing operation may occur in the same cell or different cells under the same eNB, and may also occur in different cells under different eNBs. When the first self organizing operation and the second self organizing operation occur in the same cell or different cells under the same eNB, the eNB performs a procedure of the coordination processing method for a self organizing operation in the foregoing embodiments of the present invention. When the first self organizing operation and the second self organizing operation occur in different cells under different eNBs, a first eNB that performs the first self organizing operation may obtain a preset coordination relationship between the first self organizing operation and the second self organizing operation and send the preset coordination relationship to a second eNB that performs the second self organizing operation, and the first eNB and the second eNB coordinately perform the first self organizing operation and the second self organizing operation according to the coordination relationship; alternatively, the first eNB may also notify, before performing the first self organizing operation, the second eNB that performs the second self organizing operation, the second eNB obtains a preset coordination relationship between the first self organizing operation and the second self organizing operation, and then the first eNB and the second eNB coordinately perform the first self organizing operation and the second self organizing operation according to the coordination relationship.

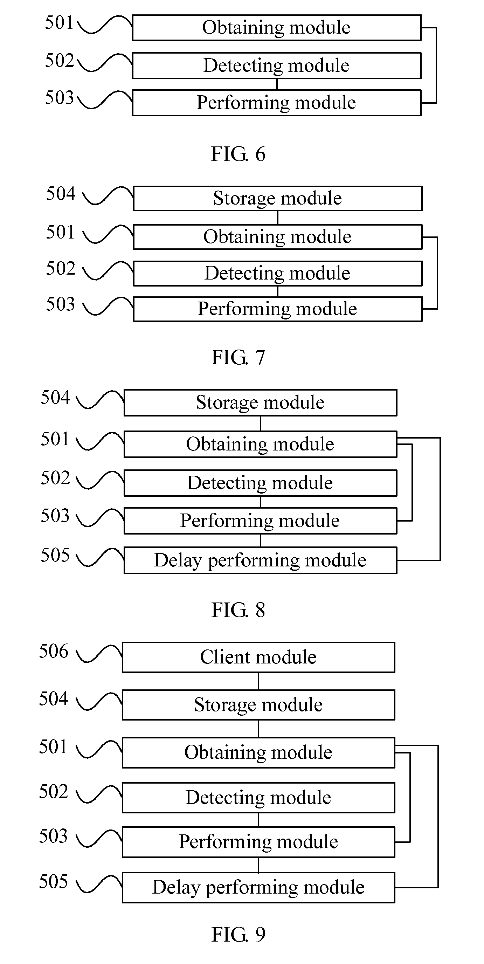

FIG. 6 is a schematic structural diagram of a coordination processing device for a self organizing operation according to an embodiment of the present invention. In this embodiment, the coordination processing device for a self organizing operation may be configured to implement the coordination processing method for a self organizing operation in each foregoing embodiment of the present invention. As shown in FIG. 6, in this embodiment, the coordination processing device for a self organizing operation includes an obtaining module 501, a detecting module 502, and a performing module 503. The obtaining module 501 is configured to obtain a preset coordination relationship between a first self organizing operation and a second self organizing operation before performing the first self organizing operation. The detecting module 502 is configured to detect whether the second self organizing operation exists. The performing module 503 is configured to, according to a detection result of the detecting module 502, perform the first self organizing operation and the second self organizing operation according to the coordination relationship when the second self organizing operation exists, where the coordination relationship is obtained by the obtaining module 501; and perform the first self organizing operation when the second self organizing operation does not exist.

As an embodiment of the present invention, the coordination relationship may include any one or multiple kinds of the following: a delay relationship, a performing relationship in different application scenarios, a priority relationship, a weight relationship, and a logic operation relationship. As a specific example of the present invention, the delay relationship may specifically be a time relationship, or called a time delay relationship, and may also be an event relationship, or called an event delay relationship.

Likewise, in a coordination processing device for a self organizing operation in each embodiment of the present invention, a first self organizing operation and a second self organizing operation may both be SH operations, SO operations, or SC operations. In addition, as another specific embodiment of the present invention, a first self organizing operation and a second self organizing operation may also be an SH operation and an SO operation respectively, or be an SH operation and an SC operation respectively, or be an SO operation and an SC operation respectively. For example, the first self organizing operation is an SH operation, and the second self organizing operation is an SO operation. For another example, the first self organizing operation is an SO operation, and the second self organizing operation is an SH operation.

FIG. 7 is a schematic structural diagram of a coordination processing device for a self organizing operation according to another embodiment of the present invention. Compared with the embodiment shown in FIG. 6, in this embodiment, the coordination processing device for a self organizing operation further includes a storage module 504, configured to store a coordination relationship between a first self organizing operation and a second self organizing operation. Accordingly, an obtaining module 501 specifically obtains the coordination relationship between the first self organizing operation and the second self organizing operation from the storage module 504.

FIG. 8 is a schematic structural diagram of a coordination processing device for a self organizing operation according to another embodiment of the present invention. In this embodiment, the coordination processing device for a self organizing operation may be configured to implement a procedure in an embodiment in which a first self organizing operation and a second self organizing operation both are SH operations, where a coordination relationship is specifically a delay relationship. As shown in FIG. 8, compared with the embodiment shown in FIG. 7, in this embodiment, the coordination processing device for a self organizing operation further includes a delay performing module 505, configured to, after the performing module 503 finishes performing the first self organizing operation, perform a delay according to a delay relationship, where the delay relationship is obtained by an obtaining module 501. Accordingly, the performing module 503 specifically performs the second self organizing operation after the delay performing module 505 finishes performing the delay.

Corresponding to a procedure in the embodiment shown in FIG. 2, in the embodiment shown in FIG. 8, the delay relationship may specifically be a time delay relationship. Accordingly, the delay performing module 505 may be specifically implemented through a timer. The timer counts time according to preset time when the performing module 503 finishes performing the first self organizing operation, where the preset time is specified in a time delay relationship obtained by the obtaining module 501. The performing module 503 specifically performs, according to a timing result of the timer, the second self organizing operation when the preset time ends.

In addition, corresponding to a procedure in the embodiment shown in FIG. 3, in the embodiment shown in FIG. 8, the delay relationship may specifically be an event delay relationship. Accordingly, the delay performing module 505 may be specifically implemented through an event counter. When the performing module 503 finishes performing the first self organizing operation, the event counter counts, according to an event delay relationship, the number of occurrences of an event that is specified in the event delay relationship, where the event delay relationship is obtained by the obtaining module 501. According to a counting result of the event counter, the performing module 503 specifically performs the second self organizing operation when the number of occurrences of the specified event reaches the number of occurrences of an event, where the number of occurrences of the event is specified in the event delay relationship.

FIG. 9 is a schematic structural diagram of a coordination processing device for a self organizing operation according to another embodiment of the present invention. Compared with the embodiment shown in FIG. 7 or FIG. 8, in this embodiment, the coordination processing device for a self organizing operation further includes a client module 506, configured to: receive a coordination relationship setting request; store a coordination relationship in the coordination relationship setting request in a storage module 504; and when receiving a coordination relationship query request, obtain a corresponding coordination relationship from the storage module 504 according to a query condition in the coordination relationship query request and display the corresponding coordination relationship. In addition, the client module 506 may further: update an original content of the coordination relationship in the storage module 504 according to a target content in a coordination relationship update request when receiving the coordination relationship update request, or when receiving a coordination relationship deleting request, delete, according to the coordination relationship deleting request, the coordination relationship stored in the storage module 504. The coordination relationship setting request, the coordination relationship query request, the coordination relationship update request, and the coordination relationship deleting request may be sent by a user.

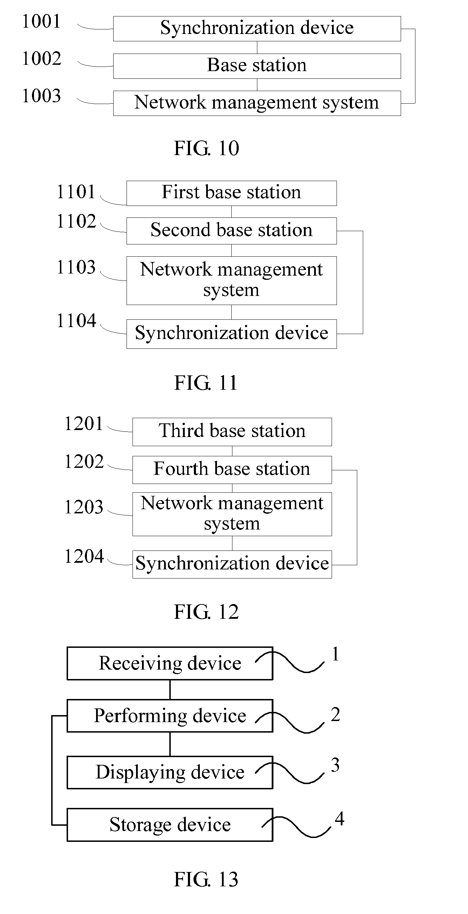

FIG. 10 is a schematic structural diagram of a communication system according to an embodiment of the present invention. In this embodiment, the communication system may be configured to implement the coordination processing method for a self organizing operation in each foregoing embodiment of the present invention. As shown in FIG. 10, in this embodiment, the communication system includes a base station 1002, configured to: obtain a preset coordination relationship between a first self organizing operation and a second self organizing operation before performing the first self organizing operation; when the second self organizing operation exists, perform the first self organizing operation and the second self organizing operation according to the coordination relationship; and when the second self organizing operation does not exist, perform the first self organizing operation.

Referring to FIG. 10 again, in this embodiment, the communication system may further include a network management system 1003, configured to receive a coordination relationship setting request and store a coordination relationship in the coordination relationship setting request in the base station 1002. Furthermore, the network management system 1003 is further configured to: when receiving a coordination relationship query request, obtain a corresponding coordination relationship from the base station 1002 according to a query condition in the coordination relationship query request and display the corresponding coordination relationship; or when receiving a coordination relationship update request, update, according to a target content in the coordination relationship update request, an original content of the coordination relationship stored in the base station 1002; or when receiving a coordination relationship deleting request, delete, according to the coordination relationship deleting request, the coordination relationship stored in the base station 1002.

Furthermore, in the communication system in the embodiment shown in FIG. 10, the network management system 1003 may further store the coordination relationship in the network management system 1003 simultaneously or separately, so as to facilitate querying, updating or deletion performed by a user. When the base station 1002 and the network management system 1003 store a coordination relationship simultaneously, as shown in FIG. 10, the communication system may further include a synchronization device 1001, configured to: monitor the coordination relationships stored in the base station 1002 and the network management system 1003, and when a coordination relationship in the base station 1002 or in the network management system 1003 is changed, update an unchanged coordination relationship in the network management system 1003 or in the base station 1002 according to the changed coordination relationship, so as to keep synchronization between the coordination relationships in the base station 1002 and the network management system 1003.

FIG. 11 is a schematic structural diagram of a communication system according to another embodiment of the present invention. In this embodiment, the communication system may also be configured to implement the coordination processing method for a self organizing operation in each foregoing embodiment of the present invention. As shown in FIG. 11, in this embodiment, the communication system includes a first base station 1101 and a second base station 1102. The first base station 1101 is configured to: obtain a preset coordination relationship between a first self organizing operation and a second self organizing operation before performing the first self organizing operation; when a second self organizing operation that needs to be performed by the second base station 1102 exists, send the coordination relationship to the second base station 1102; and perform the first self organizing operation in coordination with the second base station 1102 according to the coordination relationship. The second base station 1102 is configured to perform the second self organizing operation in coordination with the first base station 1101 according to the coordination relationship.

Referring to FIG. 11 again, in this embodiment, the communication system may further include a network management system 1103, configured to receive a coordination relationship setting request and store a coordination relationship in the coordination relationship setting request in the first base station 1101. Furthermore, the network management system 1103 may further: obtain a corresponding coordination relationship from the first base station 1101 according to a query condition in a coordination relationship query request when receiving the coordination relationship query request, and display the corresponding coordination relationship; or when receiving a coordination relationship update request, update, according to a target content in the coordination relationship update request, an original content of the coordination relationship stored in the first base station 1101; or when receiving a coordination relationship deleting request, delete, according to the coordination relationship deleting request, the coordination relationship stored in the first base station 1101.

Furthermore, in the communication system in the embodiment shown in FIG. 11, the network management system 1103 may further store the coordination relationship in the network management system 1103 simultaneously or separately, so as to facilitate querying, updating or deletion performed by a user. When the first base station 1101 and the network management system store a coordination relationship simultaneously, as shown in FIG. 11, the communication system may further include a synchronization device 1104, configured to: monitor the coordination relationships stored in the first base station 1101 and the network management system 1103, and when a coordination relationship in the first base station 1101 or in the network management system 1103 is changed, update an unchanged coordination relationship in the network management system 1103 or in the first base station 1101 according to the changed coordination relationship, so as to keep synchronization between the coordination relationships in the base station and the network management system.

FIG. 12 is a schematic structural diagram of a communication system according to another embodiment of the present invention. In this embodiment, the communication system may also be configured to implement the coordination processing method for a self organizing operation in each foregoing embodiment of the present invention. As shown in FIG. 12, in this embodiment, the communication system includes a third base station 1201 and a fourth base station 1202. The third base station 1201 is configured to: send a notification message to the fourth base station 1202 before performing a first self organizing operation, so as to notify the fourth base station 1202 that the third base station 1201 will start performing the first self organizing operation; receive a coordination relationship between the first self organizing operation and a second self organizing operation, where the coordination relationship is sent by the fourth base station 1202; and perform the first self organizing operation in coordination with the fourth base station 1202 according to the coordination relationship. The fourth base station 1202 is configured to: receive the notification message; obtain a preset coordination relationship between the first self organizing operation and the second self organizing operation and send the preset coordination relationship to the third base station 1201; and perform the second self organizing operation in coordination with the third base station 1201 according to the coordination relationship.

Referring to FIG. 12 again, in this embodiment, the communication system may further include a network management system 1203, configured to receive a coordination relationship setting request and store a coordination relationship in the coordination relationship setting request in the fourth base station 1202. Furthermore, the fourth base station 1202 may further: obtain a corresponding coordination relationship from the fourth base station 1202 according to a query condition in a coordination relationship query request when receiving the coordination relationship query request and display the corresponding coordination relationship; or when receiving a coordination relationship update request, update, according to a target content in the coordination relationship update request, an original content of the coordination relationship stored in the fourth base station 1202; or when receiving a coordination relationship deleting request, delete, according to the coordination relationship deleting request, the coordination relationship stored in the fourth base station 1202.

Furthermore, in the communication system in the embodiment shown in FIG. 12, the network management system 1203 may further store the coordination relationship in the network management system 1203 simultaneously or separately, so as to facilitate querying, updating or deletion performed by a user. When the fourth base station 1202 and the network management system 1203 store a coordination relationship simultaneously, as shown in FIG. 12, the communication system may further include a synchronization device 1204, configured to: monitor the coordination relationships stored in the fourth base station 1202 and the network management system 1203, and when a coordination relationship in the fourth base station 1202 or in the network management system 1203 is changed, update an unchanged coordination relationship in the network management system 1203 or in the fourth base station 1202 according to the changed coordination relationship, so as to keep synchronization between the coordination relationship in the base station and the coordination relationship in the network management system.

FIG. 13 is a schematic structural diagram of a network management system according to an embodiment of the present invention. As shown in FIG. 13, in this embodiment, the network management system includes a receiving device 1, a performing device 2, and a displaying device 3. The receiving device 1 is configured to receive a coordination relationship setting request, a coordination relationship query request, a coordination relationship update request, and a coordination relationship deleting request. The performing device 2 is configured to store a coordination relationship in the coordination relationship setting request in a base station, where the coordination relationship setting request is received by the receiving device 1, and furthermore, may obtain a corresponding coordination relationship from the base station according to a query condition in the coordination relationship query request and send the corresponding coordination relationship to the displaying device 3, or update an original content of the coordination relationship according to a target content in the coordination relationship update request, or delete the coordination relationship according to the coordination relationship deleting request. The displaying device 3 is configured to display the coordination relationship sent by the performing device 2.

Referring to FIG. 13 again, in this embodiment of the present invention, the network management system may further include a storage device 4, configured to store a coordination relationship received by the receiving device 1. Accordingly, the performing device 2 is further configured to store the coordination relationship in the storage device 4. Furthermore, the performing device 2 may further obtain a corresponding coordination relationship from the storage device according to a query condition in the coordination relationship query request, where the coordination relationship query request is received by the receiving device 1, and send the corresponding coordination relationship to the displaying device 3, or update an original content of the coordination relationship in the storage device according to a target content in the coordination relationship update request, or delete the coordination relationship in the storage device according to the coordination relationship deleting request.

In each embodiment of the present invention, the network management system may set a coordination relationship in a base station and/or a network management system through a northbound interface or a southbound interface or a private interface according to a coordination relationship setting request, a coordination relationship query request, a coordination relationship update request, and a coordination relationship deleting request that are sent by a user, and query, update, or delete the coordination relationship, so as to implement management of the coordination relationship. As an implementation manner of the embodiment of the present invention, a coordination relationship in a network element side that serves as the base station is managed through a network side that serves as the network management system. The network side includes two substances: a network management substance (Network Management substance, hereinafter referred to as NMS) and an element management substance (Element Management substance, hereinafter referred to as EMS). The NMS mainly implements a network management layer (Network Management Layer, hereinafter referred to as NML) function in the international telecommunications union telecommunication management network (International Telecommunications Union Telecommunication Management Network, hereinafter referred to as ITU TMN) and provides a network equipment-oriented operation management function. The EMS mainly implements an element management layer (Element Management Layer, hereinafter referred to as EML) function in the ITU TMN, that is, implements an equipment-oriented operation maintenance function. An interface between the NMS and the EMS is called an interface-N (Interface-N, hereinafter referred to as Itf-N), that is, a northbound interface. In the Itf-N, some standard integration reference points (Integration Reference Point, hereinafter referred to as IRP) are defined, for example, a basic configuration management IRP, a batch configuration management IRP, and a notification IRP. The management of the coordination relationship, including adding, querying, updating, and deleting the coordination relationship, is implemented through functions provided by these integration reference points. An interface between the EMS and network element equipment at the network element side is called an interface-S (Interface-S, hereinafter referred to as Itf-S), that is, a southbound interface. The management of the coordination relationship, including adding, querying, updating, and deleting the coordination relationship, may be implemented through the southbound interface. In addition, a private interface between the NMS and the network element equipment may also be additionally added. The management of the coordination relationship, including adding, querying, updating, and deleting the coordination relationship, is implemented through the private interface.

Persons of ordinary skill in the art may understand that all or a part of the steps of the foregoing method embodiments may be implemented by a program instructing relevant hardware. The foregoing program may be stored in a computer readable storage medium. When the program runs, the steps of the foregoing method embodiments are performed. The foregoing storage medium may be any medium that is capable of storing program codes, such as a ROM, a RAM, a magnetic disk or an optical disk.

In the embodiments of the present invention, the preset coordination relationship between the first self organizing operation and the second self organizing operation may be queried when the first self organizing operation is detected, and the second self organizing operation is performed according to the coordination relationship, thereby effectively coordinating various self organizing operations existing in a SON technology, and avoiding an unnecessary self organizing operation and rollback recovery operation. Compared with the prior art, a network resource consumed by the unnecessary self organizing operation and rollback recovery operation is saved, a work load of a network is relieved, and network performance is improved.

Finally, it should be noted that, the foregoing embodiments are merely used to describe the technical solutions of the present invention, but should not be construed as a limitation to the present invention. Although the present invention is described in detail with reference to the foregoing exemplary embodiments, persons of ordinary skill in the art should understand that, modifications or equivalent replacements may still be made to the technical solutions of the present invention, however, these modifications or equivalent replacements do not depart from the scope of the technical solutions of the present invention.

## Claims

1. A coordination processing method for a self organizing operation, comprising:
obtaining a preset coordination relationship between a first self organizing operation and a second self organizing operation before performing the first self organizing operation;
if the second self organizing operation exists, performing the first self organizing operation and the second self organizing operation according to the coordination relationship; and
if the second self organizing operation does not exist, performing the first self organizing operation.

2. The method according to claim 1, wherein the first self organizing operation and the second self organizing operation are self-healing, SH, operations; or
the first self organizing operation and the second self organizing operation are self-optimization, SO, operations; or
the first self organizing operation and the second self organizing operation are self-configuration, SC, operations; or
the first self organizing operation is an SH operation and the second self organizing operation is an SO operation; or
the first self organizing operation is an SO operation and the second self organizing operation is an SH operation; or
the first self organizing operation is an SH operation and the second self organizing operation is an SC operation; or
the first self organizing operation is an SC operation and the second self organizing operation is an SH operation; or
the first self organizing operation is an SO operation and the second self organizing operation is an SC operation; or
the first self organizing operation is an SC operation and the second self organizing operation is an SO operation.

3. The method according to claim 2, wherein the coordination relationship comprises any one or multiple kinds of the following: a delay relationship, a performing relationship in different application scenarios, a priority relationship, a weight relationship, and a logic operation relationship.

4. The method according to claim 3, wherein when the coordination relationship is a delay relationship, the performing the first self organizing operation and the second self organizing operation according to the coordination relationship comprises: performing a delay according to the delay relationship after the first self organizing operation ends; and performing the second self organizing operation after the delay ends.

5. The method according to claim 4, wherein the delay relationship is a time delay relationship, the performing the delay according to the delay relationship after the first self organizing operation ends and performing the second self organizing operation after the delay ends comprises: when the first self organizing operation ends, counting time according to preset time that is specified in the time delay relationship; and when the preset time ends, performing the second self organizing operation; or
the delay relationship is an event delay relationship, the performing the delay according to the delay relationship after the first self organizing operation ends and performing the second self organizing operation after the delay ends comprises: after the first self organizing operation ends, counting the number of occurrences of an event, wherein the number of occurrences of the event is specified in the event delay relationship; and when the number of occurrences of the specified event reaches the number of occurrences of the event, wherein the number of occurrences of the event is specified in the event delay relationship, performing the second self organizing operation.

6. The method according to any one of claims 2 to 5, wherein the first self organizing operation is cell outage detection, COD, and the second self organizing operation is cell outage compensation, COC.

7. The method according to any one of claims 1 to 5, further comprising:
setting the coordination relationship according to any one or multiple items of the following: a self organizing operation type, an application scenario type, an operation object type, an operation obj ect attribute, an event type, and a time type.

8. The method according to claim 7, further comprising:
querying, updating, or deleting the set coordination relationship.

9. A coordination processing device for a self organizing operation, comprising:
an obtaining module, configured to obtain a preset coordination relationship between a first self organizing operation and a second self organizing operation before performing the first self organizing operation;
a detecting module, configured to detect whether the second self organizing operation exists; and
a performing module, configured to, according to a detection result of the detecting module, perform the first self organizing operation and the second self organizing operation according to the coordination relationship when the second self organizing operation exists, wherein the coordination relationship is obtained by the obtaining module; and perform the first self organizing operation when the second self organizing operation does not exist.

10. The device according to claim 9, further comprising:
a storage module, configured to store a coordination relationship between the first self organizing operation and the second self organizing operation; and
the obtaining module is further configured to obtain the coordination relationship between the first self organizing operation and the second self organizing operation from the storage module.

11. The device according to claim 10, wherein the coordination relationship comprises any one or multiple kinds of the following: a delay relationship, a performing relationship in different application scenarios, a priority relationship, a weight relationship, and a logic operation relationship.

12. The device according to claim 11, wherein when the coordination relationship is a delay relationship, the device further comprises:
a delay performing module, configured to perform a delay according to a delay relationship after the first self organizing operation ends, wherein the delay relationship is queried and found by a querying module; and
the performing module is further configured to perform the second self organizing operation after the delay performing module finishes performing the delay.

13. The device according to claim 11, wherein the delay relationship is a time delay relationship, the delay performing module is specifically a timer, and when the performing module finishes performing the first self organizing operation, the timer counts time according to preset time that is specified in the time delay relationship, and the performing module specifically performs the second self organizing operation according to a timing result of the timer when the preset time ends; or
the delay relationship is an event delay relationship, the delay performing module is an event counter, and when the performing module finishes performing the first self organizing operation, the event counter counts the number of occurrences of an event according to the event delay relationship, wherein the number of occurrences of the event is specified in the event delay relationship, and according to a counting result of the event counter, the performing module performs the second self organizing operation when the number of occurrences of the specified event reaches the number of occurrences of the event, wherein the number of occurrences of the event is specified in the event delay relationship.

14. The device according to any one of claims 10 to 13, further comprising:
a client module, configured to: receive a coordination relationship setting request; store a coordination relationship in the coordination relationship setting request in the storage module; and when receiving a coordination relationship query request, obtain a corresponding coordination relationship from the storage module according to a query condition in the coordination relationship query request and display the corresponding coordination relationship.

15. The device according to claim 14, wherein the client module is further configured to receive a coordination relationship update request and update an original content of the coordination relationship according to a target content in the coordination relationship update request; or is further configured to receive a coordination relationship deleting request and delete the coordination relationship according to the coordination relationship deleting request.

16. The device according to any one of claims 9 to 13, wherein the first self organizing operation and the second self organizing operation are self-healing, SH, operations; or
the first self organizing operation and the second self organizing operation are self-optimization, SO, operations; or
the first self organizing operation and the second self organizing operation are self-configuration, SC, operations; or
the first self organizing operation is an SH operation and the second self organizing operation is an SO operation; or
the first self organizing operation is an SO operation and the second self organizing operation is an SH operation; or
the first self organizing operation is an SH operation and the second self organizing operation is an SC operation; or
the first self organizing operation is an SC operation and the second self organizing operation is an SH operation; or
the first self organizing operation is an SO operation and the second self organizing operation is an SC operation; or
the first self organizing operation is an SC operation and the second self organizing operation is an SO operation.

17. A communication system, comprising a base station, configured to: obtain a preset coordination relationship between a first self organizing operation and a second self organizing operation before performing the first self organizing operation; when the second self organizing operation exists, perform the first self organizing operation and the second self organizing operation according to the coordination relationship; and when the second self organizing operation does not exist, perform the first self organizing operation.

18. The system according to claim 17, further comprising a network management system, configured to receive a coordination relationship setting request and store a coordination relationship in the coordination relationship setting request in the base station and/or the network management system, wherein:
the network management system is further configured to: when receiving a coordination relationship query request, obtain a corresponding coordination relationship from the base station and/or the network management system according to a query condition in the coordination relationship query request, and display the corresponding coordination relationship; or when receiving a coordination relationship update request, update an original content of the coordination relationship in the base station and/or the network management system according to a target content in the coordination relationship update request; or when receiving a coordination relationship deleting request, delete the coordination relationship in the base station and/or the network management system according to the coordination relationship deleting request.

19. The system according to claim 18, further comprising a synchronization device, configured to: monitor the coordination relationships stored in the base station and the network management system, and when a coordination relationship in the base station or in the network management system is changed, update an unchanged coordination relationship in the network management system or in the base station according to the changed coordination relationship, so as to keep synchronization between the coordination relationships in the base station and the network management system.

20. A communication system, comprising:
a first base station, configured to: obtain a preset coordination relationship between a first self organizing operation and a second self organizing operation before performing the first self organizing operation; when a second self organizing operation that needs to be performed by a second base station exists, send the coordination relationship to the second base station; and perform the first self organizing operation in coordination with the second base station according to the coordination relationship; and
the second base station, configured to perform the second self organizing operation in coordination with the first base station according to the coordination relationship.

21. The system according to claim 20, further comprising a network management system, configured to receive a coordination relationship setting request and store a coordination relationship in the coordination relationship setting request in the first base station and/or the network management system, wherein:
the network management system is further configured to: when receiving a coordination relationship query request, obtain a corresponding coordination relationship from the first base station and/or the network management system according to a query condition in the coordination relationship query request, and display the corresponding coordination relationship; or when receiving a coordination relationship update request, update an original content of the coordination relationship in the first base station and/or the network management system according to a target content in the coordination relationship update request; or when receiving a coordination relationship deleting request, delete the coordination relationship in the first base station and/or the network management system according to the coordination relationship deleting request.

22. The system according to claim 21, further comprising a synchronization device, configured to: monitor the coordination relationships stored in the first base station and the network management system, and when a coordination relationship in the first base station or in the network management system is changed, update an unchanged coordination relationship in the network management system or in the first base station according to the changed coordination relationship, so as to keep synchronization between the coordination relationships in the first base station and the network management system.

23. A communication system, comprising:
a third base station, configured to: send a notification message to a fourth base station before performing a first self organizing operation; receive a coordination relationship between the first self organizing operation and a second self organizing operation, wherein the coordination relationship is sent by the fourth base station; and perform the first self organizing operation in coordination with the fourth base station according to the coordination relationship; and
the fourth base station, configured to: receive the notification message; obtain a preset coordination relationship between the first self organizing operation and the second self organizing operation, and send the preset coordination relationship to the third base station; and perform the second self organizing operation in coordination with the third base station according to the coordination relationship.

24. The system according to claim 23, further comprising a network management system, configured to receive a coordination relationship setting request and store a coordination relationship in the coordination relationship setting request in the fourth base station and/or the network management system, wherein:
the network management system is further configured to: when receiving a coordination relationship query request, obtain a corresponding coordination relationship from the fourth base station and/or the network management system according to a query condition in the coordination relationship query request, and display the corresponding coordination relationship; or when receiving a coordination relationship update request, update an original content of the coordination relationship in the fourth base station and/or the network management system according to a target content in the coordination relationship update request; or when receiving a coordination relationship deleting request, delete the coordination relationship in the fourth base station and/or the network management system according to the coordination relationship deleting request.

25. The system according to claim 24, further comprising a synchronization device, configured to: monitor the coordination relationships stored in the fourth base station and the network management system, and when a coordination relationship in the fourth base station or in the network management system is changed, update an unchanged coordination relationship in the network management system or in the fourth base station according to the changed coordination relationship, so as to keep synchronization between the coordination relationships in the fourth base station and the network management system.

26. A network management system, comprising:
a receiving device, configured to receive a coordination relationship setting request, a coordination relationship query request, a coordination relationship update request, and a coordination relationship deleting request;
a performing device, configured to store a coordination relationship in the coordination relationship setting request in an base station or the network management system, and further configured to obtain a corresponding coordination relationship from the base station or the network management system according to a query condition in the coordination relationship query request, and send the corresponding coordination relationship to a display device; or update an original content of the coordination relationship in the base station or the network management system according to a target content in the coordination relationship update request; or delete the coordination relationship in the base station or the network management system according to the coordination relationship deleting request; and
the display device, configured to display the coordination relationship.

27. The system according to claim 26, further comprising:
a storage device, configured to store the coordination relationship; and
the performing device is further configured to store a coordination relationship in the storage device, and is further configured to obtain a corresponding coordination relationship from the storage device according to a query condition in the coordination relationship query request, and send the corresponding coordination relationship to the display device, or update an original content of the coordination relationship in the storage device according to a target content in the coordination relationship update request, or delete the coordination relationship in the storage device according to the coordination relationship deleting request.
